# EUROPEAN PATENT APPLICATION

(11) **EP 3 284 800 A1**
(43) Date of publication of application: **21.02.2018**
(21) Application number: 16184761.1
(22) Date of filing: 18.08.2016
(51) Int. Cl.: C09K 9/02, G02F 1/15

(54) **COMPOSITION FOR PREPARING AN ELECTROCHROMIC LAYER**

(71) Applicant: BASF SE, 67056 Ludwigshafen am Rhein (DE)
(72) Inventor: HEMGESBERG, Maximilian, 67663 Kaiserslautern (DE); MUELLER, Imke Britta, 67056 Ludwigshafen (DE); NOERENBERG, Ralf, 67059 Ludwigshafen (DE); HINKEL, Juliane, 67056 Ludwigshafen (DE)
(74) Representative: Eisenführ Speiser

(57) **Abstract**

Described are a composition for forming an electrochromic layer, a process for producing a layer assembly comprising an electrochromic layer, and an article comprising such layer assembly.

## Description

The present invention relates to a composition for forming an electrochromic layer. The invention also relates to a process for producing a layer assembly comprising an electrochromic layer and to an article comprising such layer assembly.

Layers having controllable alteration of light transmission are used in devices or applications like optical filters, windows, films, opthalmic lenses, actinometers, molecular sensors, photochromic inks, paints or fibers, variable transmission filters, optical information storage systems, optoelectronic systems and reversible holographic systems. Controllable alteration of light transmission is achieved by incorporating a compound having electrochromic and photochromic properties in a layer or coating disposed on a surface of a substrate. The substrate is electronically conductive, or comprises an electronically conductive surface capable of applying an electric field to the layer comprising the compound having electrochromic and photochromic properties. Said electronically conductive surface of the substrate is herein also referred to as an electrode. The layer comprising said compound having electrochromic and photochromic properties is usually sandwiched between a first electrode and a second electrode. A layer comprising said compound having electrochromic and photochromic properties is herein also referred to as an electrochromic layer.

A compound having electrochromic and photochromic properties is capable of transitioning between an optically transparent ("light") state and a colored ("dark") state responsive to application of light in the UV and/or short wavelength-VIS range, or application of an electric voltage. More specifically, a compound having electrochromic and photochromic properties may darken (reach said 'dark state') when exposed to light in the UV and/or VIS range, and may lighten ("fade", achieve said 'light state") when exposed to an electric charge ('electro-fading'). Such a compound having electrochromic and photochromic properties is also referred to as an auto-darkening material, see e.g. WO 2013/152425. Certain compounds having electrochromic and photochromic properties fade upon exposure to selected wavelengths of visible (VIS) light ("photofade", "photobleach"), without sacrificing of the ability to be electrofaded when restored to a darkened state.

WO 2013/152425 discloses a composition (referred to as a "switching material") comprising one or more compounds having electrochromic and photochromic properties dispersed homogeneously through the switching material, one or more polymers, and an electrolyte comprising a salt and a solvent portion comprising one or more solvents.

WO 2013/152425 also discloses an article (referred to as a "switchable film") comprising a first and optionally a second substantially transparent substrate; a first and a second electrode disposed on the surface of at least one of the substrates; and a switching material as defined above disposed between the first and the optional second substrate and in contact with the first and the second electrode, and WO 2013/152425 also discloses a laminate assembly comprising said switchable film laminated between a first and a second sheet of glass.

In said article the switching material forms an electrochromic layer. The above-mentioned "solvent portion" remains in said electrochromic layer. Selection of the one or more solvents of the solvent portion depends on several factors including
- low freezing and high boiling point
- allowing dissolution and dissociation of salts into mobile anions and cations
- allowing dissolution of a compound having electrochromic and photochromic properties
- high dielectric constant
- chemical compatibility with the other constituents of the "switching material" composition (polymers, salts and compounds having electrochromic and photochromic properties, see above) and the constituents of the substrates (including the electronically conducting materials at the surfaces of said substrates),
- stability against electrical voltage and against light irradiation in the UV and/or VIS range.

According to WO 2013/152425, the solvent portion in the composition referred to as a "switching material" preferably comprises one or more of dimethyl-2-methylglutarate, 1,2-butylene carbonate, 2,2,4-trimethyl-1,3-pentanediol monoisobutyrate, diethyl succinate, diethyl adipate, and dimethyl adipate.

Unfortunately, there is a certain risk that those solvents and mixtures thereof may cause swelling of polymer materials which are typically used as substrates for electrochromic layers. This is especially the case with polymer substrates comprising or consisting of polyethylene terephthalate (PET).

Accordingly it is an object of the invention to provide compositions which overcome the above-mentioned drawbacks.

According to the present invention, there is provided a composition, especially for forming an electrochromic layer, said composition comprising the following constituents
(A) a mixture consisting of
   (A-1) one or more compounds selected from the group consisting of 1,2-butylene carbonate, 2,3-butylene carbonate, propylene carbonate and glycerol carbonate
   (A-2) one or more compounds selected from the group consisting of cyclohexylacetate,
      alkyl-cyclohexylacetates wherein said alkyl group is selected from the group consisting of alkyls having 1 to 9, preferably 1 to 4 carbon atoms, preferably 4-tertbutylcyclohexylacetat
      2-ethylhexylacetate
      dialkyl esters of 1,2-cyclohexanedicarboxylic acid, wherein said alkyl groups are selected from the group consisting of alkyls having 1 to 4 carbon atoms, preferably 1,2-cyclohexanedicarboxylic acid diethylester;
      dihydroterpinylacetate
      isobornylacetate
      bornylacetate
      fenchylacetate
   (A-3) optionally one or more compounds selected from the group consisting of 2,2,4-trimethyl-1,3-pentanediol monoisobutyrate dimethyl-2-methylglutarate
      diethyl malonate
      propylene glycol diacetate
      ethylene glycol diacetate,
      glycerol triesters of carboxylic acids having 3 to 6 carbon atoms, preferably glycerol triesters of propionic acid and glycerol triesters of butyric acid, tri-alkyl acetylcitrates, wherein said alkyl groups are selected from the group consisting of alkyls having 1 to 4 carbon atoms, preferably tri-n-ethylacetylcitrate and tri-n-butylacetylcitrate
   wherein in said mixture (A) the total weight fraction of said compounds (A-2) and (A-3) is 50 wt.-% or more, preferably 60 wt.-% or more, more preferably 70 wt.-% or more, most preferably 80 wt.-% or more, based on the total weight of said mixture (A)
(B) one or more polymers;
(C) one or more compounds having electrochromic and photochromic properties;
(D) one or more electrolytes
wherein the constituents (B), (C) and (D) are dissolved or dispersed in said mixture (A).

As used herein the phrase "dissolved or dispersed" means that the
- either all of said constituents are dissolved in said liquid phase (A),
- or all of said constituents are dispersed in said liquid phase (A),
- or some of said constituents are dissolved in said liquid phase (A) and some of said constituents are dispersed in said liquid phase (A).

Constituents (C) and (D) are usually dissolved in said liquid phase (A).

In said mixture (A) the weight fraction of said compounds (A-1) is 50 wt.-% or less, preferably 40 wt.-% or less, more preferably 30 wt.-% or less, most preferably 20 wt.-% or less, based on the total weight of said mixture (A).

Surprisingly, it has been found that polymeric substrates, especially those comprising polyethylene terephthalate (PET), which tend to swell in the presence of organic liquids, exhibit a remarkably low tendency to swell when coated with an electrochromic layer formed by applying a composition according to the present invention on a surface of a substrate.

The constituents of the above-defined preferred composition according to the present invention are now described in more detail.

The mixture (A) consists of constituents (A-1), (A-2) and optionally (A-3) as defined above. In certain cases the mixture (A) consists of constituents (A-1) and (A-2) as defined above. In other cases the mixture (A) consists of constituents (A-1), (A-2) and (A-3) as defined above.

With regard to the above-defined constituents of mixture (A), each generic alkyl group listed herein is meant to include all possible isomers (straight-chain and branched), and in cases where an above-mentioned compound exists in the form of two or more stereo-isomers, said compound includes each of those stereoisomers as well as mixtures thereof, including racemic mixtures.

The mixture (A) has a melting point of -20 °C or less and a boiling point of 150 °C or more. When an electrochromic layer is formed from a composition according to the present invention the mixture (A) remains in said electrochromic layer. The mixture (A) allows dissolution of the one or more electrolytes (D) present in the composition according to the present invention and in the electrochromic layer formed from a composition according to the present invention (as defined above). Accordingly, said mixture (A) may be considered as playing a role similar or corresponding to the "solvent portion" of the composition (switching material) disclosed in WO 2013/152425. For further details of said electrolytes (D), see below.

In a composition according to the present invention, said mixture (A) is monophase (i.e. forms a single liquid phase in said composition).

In preferred compositions, the mixture (A) consists of
(A-1) one or more compounds selected from the group consisting of 1,2-butylene carbonate, 2,3-butylene carbonate, propylene carbonate and glycerol carbonate
(A-2) one or more compounds selected from the group consisting of
   cyclohexylacetate
   alkyl-cyclohexylacetates, wherein said alkyl group is selected from the group consisting of alkyls having 1 to 9, preferably 1 to 4 carbon atoms, preferably 4-tertbutylcyclohexylacetat
   2-ethylhexylacetate
   dialkyl esters of 1,2-cyclohexanedicarboxylic acid, wherein said alkyl groups are selected from the group consisting of alkyls having 1 to 4 carbon atoms, preferably 1,2-cyclohexanedicarboxylic acid diethylester
   dihydroterpinylacetate
   isobornylacetate
   bornylacetate
   fenchylacetate
wherein in said mixture (A) the weight fraction of said compound (A-2) is 50 wt.-% or more, preferably 60 wt.-% or more, more preferably 70 wt.-% or more, most preferably 80 wt.-% or more, based on the total weight of said mixture (A). In said mixture (A) the weight fraction of said compounds (A-1) is 50 wt.-% or less, preferably 40 wt.-% or less, more preferably 30 wt.-% or less, most preferably 20 wt.-% or less, based on the total weight of said mixture (A).

Each generic alkyl group listed herein is meant to include all possible isomers (straight-chain and branched). In cases where an above-mentioned compound exists in the form of two or more stereo-isomers, said compound includes each of those stereoisomers as well as mixtures thereof, including racemic mixtures.

Further preferably, said mixture (A) consists of
(A-1) one or more compounds selected from the group consisting of 1,2-butylene carbonate, 2,3-butylene carbonate, propylene carbonate and glycerol carbonate
(A-2) one or more compounds selected from the group consisting of
   cyclohexylacetate
   4-tertbutylcyclohexylacetate
   2-ethylhexylacetate
   1,2-cyclohexanedicarboxylic acid diethylester
   dihydroterpinylacetate
   isobornylacetate
   bornylacetate
   fenchylacetate
wherein in said mixture (A) the weight fraction of said compound (A-2) is 50 wt.-% or more, preferably 60 wt.-% or more, more preferably 70 wt.-% or more, most preferably 80 wt.-% or more, based on the total weight of said mixture (A). In said mixture (A) the weight fraction of said compounds (A-1) is 50 wt.-% or less, preferably 40 wt.-% or less, more preferably 30 wt.-% or less, most preferably 20 wt.-% or less, based on the total weight of said mixture (A).

Particularly preferably, said mixture (A) consists of
(A-1) a compound selected from the group consisting of 1,2-butylene carbonate, 2,3-butylene carbonate and propylene carbonate
(A-2) a compound selected from the group consisting of cyclohexylacetate, 4-tertbutylcyclohexylacetate and 2-ethylhexylacetate
wherein in said mixture (A) the weight fraction of said compound (A-2) is 50 wt.-% or more, preferably 60 wt.-% or more, more preferably 70 wt.-% or more, most preferably 80 wt.-% or more, based on the total weight of said mixture (A). In said mixture (A) the weight fraction of said compounds (A-1) is 50 wt.-% or less, preferably 40 wt.-% or less, more preferably 30 wt.-% or less, most preferably 20 wt.-% or less, based on the total weight of said mixture (A).

In other preferred compositions, said mixture (A) consists of
(A-1) one or more compounds selected from the group consisting of 1,2-butylene carbonate, 2,3-butylene carbonate, propylene carbonate and glycerol carbonate
(A-2) one or more compounds selected from the group consisting of
   cyclohexylacetate,
   alkyl-cyclohexylacetates wherein said alkyl group is selected from the group consisting of alkyls having 1 to 9, preferably 1 to 4 carbon atoms, preferably 4-tertbutylcyclohexylacetat
   2-ethylhexylacetate
   dialkyl esters of 1,2-cyclohexanedicarboxylic acid, wherein said alkyl groups are selected from the group consisting of alkyls having 1 to 4 carbon atoms, preferably 1,2-cyclohexanedicarboxylic acid diethylester;
   dihydroterpinylacetate
   isobornylacetate
   bornylacetate
   fenchylacetate
(A-3) one or more compounds selected from the group consisting of 2,2,4-trimethyl-1,3-pentanediol monoisobutyrate
   dimethyl-2-methylglutarate
   diethyl malonate
   propylene glycol diacetate
   ethylene glycol diacetate,
   glycerol triesters of carboxylic acids having 3 to 6 carbon atoms, preferably glycerol triesters of propionic acid and glycerol triesters of butyric acid,
   tri-alkyl acetylcitrates, wherein said alkyl groups are selected from the group consisting of alkyls having 1 to 4 carbon atoms, preferably tri-n-ethylacetylcitrate and tri-n-butylacetylcitrate
wherein in said mixture (A) the total weight fraction of said compounds (A-2) and (A-3) is 50 wt.-% or more, preferably 60 wt.-% or more, more preferably 70 wt.-% or more, most preferably 80 wt.-% or more, based on the total weight of said mixture (A). In said mixture (A) the weight fraction of said compounds (A-1) is 50 wt.-% or less, preferably 40 wt.-% or less, more preferably 30 wt.-% or less, most preferably 20 wt.-% or less, based on the total weight of said mixture (A).

Each generic alkyl group listed herein is meant to include all possible isomers (straight-chain and branched). In cases where an above-mentioned compound exists in the form of two or more stereo-isomers, said compound includes each of those stereoisomers as well as mixtures thereof, including racemic mixtures.

Further preferably, said mixture (A) consists of
(A-1) one or more compounds selected from the group consisting of 1,2-butylene carbonate, 2,3-butylene carbonate, propylene carbonate and glycerol carbonate
(A-2) one or more compounds selected from the group consisting of
   cyclohexylacetate
   4-tertbutylcyclohexylacetate
   2-ethylhexylacetate
   1,2-cyclohexanedicarboxylic acid diethylester
   dihydroterpinylacetate
   isobornylacetate
   bornylacetate
   fenchylacetate
(A-3) one or more compounds selected from the group consisting of 2,2,4-trimethyl-1,3-pentanediol monoisobutyrate
   dimethyl-2-methylglutarate
   diethyl malonate
   propylene glycol diacetate
   ethylene glycol diacetate
   glycerol tripropionate
   glycerol tributyrate
   tributylacetylcitrate
   triethylacetylcitrate
wherein in said mixture (A)
the weight fraction of said compounds (A-2) is 50 wt.-% to 80 wt.-%, preferably 60 wt.-% to 70 wt.-%, and
the weight fraction of said compounds (A-3) is 10 wt.-% to 30 wt.-%, preferably 15 wt.-% to 25 wt.-%,

in each case based on the total weight of said mixture (A).

In said mixture (A) the weight fraction of said compounds (A-1) is 5 wt.-% to 40 wt.-%, preferably 5 wt.-% to 25 wt.-%, in each case based on the total weight of said mixture (A).

Particularly preferably, said mixture (A) consists of
(A-1) a compounds selected from the group consisting of 1,2-butylene carbonate, 2,3-butylene carbonate, propylene carbonate and glycerol carbonate
(A-2) a compound selected from the group consisting of cyclohexylacetate, 4-tertbutylcyclohexylacetate and 2-ethylhexylacetate
(A-3) a compound selected from the group consisting of dimethyl-2-methylglutarate, diethyl malonate, propylene glycol diacetate, ethylene glycol diacetate, glycerol tripropionate, glycerol tributyrate, tributylacetylcitrate and triethylacetylcitrate,
wherein in said mixture (A)
the weight fraction of said compound (A-2) is 50 wt.-% to 80 wt.-%, preferably 60 wt.-% to 70 wt.-%, and the weight fraction of said compound (A-3) is 10 wt.-% to 30 wt.-%, preferably 15 wt.-% to
25 wt.-%,
in each case based on the total weight of said mixture (A).

In said mixture (A) the weight fraction of said compounds (A-1) is 5 wt.-% to 40 wt.-%, preferably 5 wt.-% to 25 wt.-%, in each case based on the total weight of said mixture (A).

A composition according to the present invention further comprises one or more polymers (B). The function of the one or more polymers (B) in said composition includes
- modulating the rheology of the composition in order to aid in handling said composition and facilitate processing said composition into a layer on a substrate
- rendering the composition in a suitable shape (e.g. cast, extruded, coated or molded), i.e. in the form of a layer on a surface of a substrate.

According to WO 2013/152425, the polymer in the composition referred to as a "switching material" is preferably selected from the group of polyols, more specifically from the group of polyvinylacetals, most preferably from the group of polyvinylbutyrals (PVB).

Polyvinyl butyral is obtained by acidic hydrolysis (e.g. using hydrochloric acid) of polyvinyl acetate and subsequent (at least partial) acetalization of the obtained polyvinyl alcohol with butanal (butyraldehyde). The obtained product often contains residues of hydrochloric acid and/or acetic acid. Unfortunately, polyvinylbutyrals exhibit some drawbacks, e.g. insufficient stability especially in contact with solvents typically present in the solvent portion of the electrolyte of the "switching material" disclosed in WO 2013/152425. Degradation of the polyvinyl butyral in the electrochromic layer does not only result in reduced stability and reduced performance of said layer. Moreover, degradation products of polyvinyl butyral and residual acid and/or aldehydes, such as 2-ethylhexanal, present in the polyvinyl butyral may cause corrosion of electronically conductive materials (e.g. transparent conducting oxides or metallic electronic conductive materials) of the electrodes, resulting in impairment of electronic conductivity and reduced light transmission due to the formation of colored reaction products.

Preferably the fraction of polyvinylacetals in a composition according to the present invention is as low as possible. Preferably, a composition according to the present invention comprises polymers selected from the group consisting of polyvinylacetals in an amount of less than 25 wt.-%, more preferably less than 10 wt.-%, further preferably less than 5 wt.-%, particularly preferably less than 1 wt.-%, in each case based on the total weight of polymers (B) in said composition, and preferably does not comprise any polyvinylacetals.

Preferably, said polymers (B) are selected from the group consisting of polyurethanes and (meth)acrylate polymers. As used herein, the term (meth)acrylate polymers includes polyacrylates, polymethacrylates and copolymers of one or more acrylate monomers and one or more methacrylate monomers.

Said polyurethanes are preferably selected from the group consisting of polyadducts of
(B1) diisocyanate monomers
   and
(B2) diols consisting of
   (B2-1)a portion of first diols having a molecular weight in the range of from 50 g/mol to < 500 g/mol
   (B2-2)a portion of second diols having a molecular weight in the range of from 500 g/mol to 3500 g/mol
   wherein the fraction of
   (B1) diisocyanate monomers is 20 wt.-% to 80 wt.-%
   (B2-1) said first diols is 5 wt.-% to 35 wt.-%
   (B2-2) said second diols is 5 wt.-% to 60 wt.-%
   based on the total weight of said (B1) diisocyanate monomers and (B2) diols.

Suitable polyurethane polymers are commercially available. As known by the skilled person, polyurethane polymers are obtainable by polyaddition of diisocyanate monomers with diols. Said first diols (B2-1) are also referred to as chain extending agents or chain extenders. For further details see e.g. WO 2014/060342.

Preferably, said diisocyanate monomers (B1) are selected from the group consisting of 4,4-methylene dicyclohexyl diisocyanate and 1,6-hexamethylene diisocyanate.

Preferably, said first diols (B2-1) are selected from the group consisting of 1,3-propanediol, 1,4-butanediol, 1,6-hexanediol and hydroquinone-bis(hydroxyethyl)ether.

Preferably, said second diols (B2-2) are selected from the group consisting of polyether diols, polyolefine diols and polyester diols.

Typically said polyurethane polymer is a mixture of polyurethane molecules which are polyadducts of the same diisocyanate monomers (B), first diols (B2-1) and second diols (B2-2), but have different molecular weight.

More preferably,
- said diisocyanate monomers (B1) are selected from the group consisting of 4,4-methylene dicyclohexyl diisocyanate and 1,6-hexamethylene diisocyanate and
- said first diols (B2-1) are selected from the group consisting of 1,3-propanediol, 1,4-butanediol, 1,6-hexanediol and hydroquinone-bis(hydroxyethyl)ether
   and
- said second diols (B2-2) are selected from the group consisting of
- polyether diols
- polyolefine diols and
- polyester diols.

Polyetherdiols are also referred to as poly(alkyleneglycole)s.

Further preferably, said second diols (B2-2) are selected from the group consisting of polyetherdiols selected from the group consisting of
- polytetrahydrofuranes (also referred to as poly(tetramethylenglycol)s),
- poly(ethylene glycol)s
- poly(propylene glycol)s
- diols of copolymers of ethylene oxide and propylene oxide
- polyolefine diols selected from the group consisting of
- polyethylene diols (molecules consisting of a polyethylene chain, wherein said chain is terminated by -(CH₂)₂OH groups)
- polybutadiene diols (molecules consisting of a chain of 1,2-linked butadiene units, wherein said chain is terminated by -(CH₂)₂OH groups)
- polyester diols selected from the group consisting of
- polycaprolactones,
- random polyester condensates which are polycondensation products of C₂-C₁₂ aliphatic dicarboxylic acids and diols selected from the group consisting of C₂-C₁₂ aliphatic diols, poly(ethyleneglycol)s, poly(propyleneglycol)s and diols of copolymers of ethylene oxide and propylene oxide
- polycarbonate diols.

Preferably in said polycarbonate diols 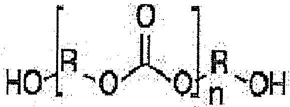
each R independently from each other R is selected from the group consisting of -CₘH₂ₘ-wherein m is an integer selected from 4 to 6,
and n is an integer selected from 3 to 29.

Preferred are
- polycarbonate diols wherein the groups R are -[(CH₂)₄]- and -[(CH₂)₆]- (also referred to as "polycarbonate diols based on butane diol and hexane diol", see WO 2013/190118)
- polycarbonate diols wherein the groups R are -[(CH₂)₅]- and -[(CH₂)₆]- (also referred to as "polycarbonate diols based on pentane diol and hexane diol", see WO 2013/190118)
- and polycarbonate diols wherein all groups R are -[(CH₂)₆]- (also referred to as "polycarbonate diols based on hexane diol", see WO 2013/190118).

Most preferred are polycarbonate diols wherein the groups R are -[(CH₂)₅]- and -[(CH₂)₆]-.

The above-mentioned diols are commercially available.

Polyurethane polymers which are polyadducts of
(B1) diisocyanate monomers, preferably the above-described preferred diisocyanate monomers (B1)
   and
(B2) diols consisting of
   (B2-1)a portion of first diols having a molecular weight in the range of from 50 g/mol to < 500 g/mol, preferably from 50 g/mol to 490 g/mol, preferably the above-defined preferred first diols (B2-1)
   (B2-2)a portion of second diols having a molecular weight in the range of from 500 g/mol to 3500 g/mol, wherein said second diols are polycarbonate diols as defined above
   are preferred polyurethane polymers (B) for the present invention. Those polyurethane polymers are commercially available and are described e.g. in WO 2013/190118.

As used herein, the weight fractions of said diisocyanate monomers (B1), first diols (B2-1) and second diols (B2-2) represent the weight fractions of the corresponding building units formed from said diisocyanate monomers (B1), first diols (B2-1) and second diols (B2-2) in said polyurethane polymer.

Preferably, said polyurethane polymers have a weight average molecular weight in the range of from 25000 g/mol to 1000000 g/mol as determined by gel permeation chromatography.

Preferably, said polyurethane polymers are thermoplastic polyurethane polymers.

Preferably, said polyurethane polymers are linear polyurethane polymers.

Preferred polyurethane polymers are those wherein two or more of the above-defined preferred features are combined.

For further details regarding preferred polyurethane polymers, reference is made to the non-prepublished patent application "Composition especially for printing or coating comprising polyurethane polymers" filed by the same applicant and on the same day as the present application. The content of said patent application is incorporated herein by reference.

For coating and printing compositions, especially screen printing inks, a rheological behavior exhibiting thixotropy or shear thinning is desirable, allowing the composition to flow sufficiently to form a uniform layer when applied to a surface of a substrate, and then to resist further flow, thus remaining as a layer on said surface of said substrate. Without wishing to be bound by theory, it is assumed that in a composition according to the present invention the above-defined polyurethane polymers (B) act as rheological modifiers in such manner that shear thinning or thixotropy is imparted to the composition.

Said (meth)acrylate polymers are preferably selected from the group consisting of copolymerization products of
- two or more different (meth)acrylate monomers CHR¹=CH-(CO)-OR² wherein
   R¹ is hydrogen or methyl
   R² is selected from the group consisting of
- linear and branched unsubstituted alkyl groups having 1 to 22 carbon atoms, preferably 2 to 22 carbon atoms
   - linear and branched hydroxyalkyl groups having 2 to 22 carbon atoms
   - cycloalkyl groups having 3 to 22 carbon atoms,
   - alkyl-substituted cycloalkyl groups having 4 to 22 carbon atoms,
- and optionally one or more further monomers having polymerizable double bonds which are not (meth)acrylate monomers CHR¹=CH-(CO)-OR².

As used herein, the term (meth)acrylates in each case includes acrylates and methacrylates.

Preferably, said (meth)acrylate polymer is a copolymerization product of two or three different (meth)acrylate monomers CHR¹=CH-(CO)-OR².

Preferably in said (meth)acrylate monomers CHR¹=CH-(CO)-OR², R² is selected from the group consisting of 2-hydroxyethyl, 2-hydroxypropyl, ethyl, butyl, hexyl, octyl, decyl, dodecyl, tetradecyl, hexadecyl, heptadecyl, octadecyl, cyclohexyl, bornyl, isobornyl, fenchyl, dihydroterpinyl, 4-tertbutylcyclohexyl, 2-tertbutylcyclohexyl, 4-methylcyclohexyl and 4-ethylcyclohexyl. Each generic alkyl group and hydroxy alkyl group listed herein is meant to include all possible isomers (straight-chain and branched).

Preferred are (meth)acrylate polymers having a weight average molecular weight in the range of from 10000 g/mol to 2000000 g/mol as determined by gel permeation chromatography.

Preferred are (meth)acrylate polymers which are copolymerization products of two different (meth)acrylate monomers CHR¹=CH-(CO)-OR², preferably copolymerization products of
- a first (meth)acrylate monomer selected from the group consisting of 2-hydroxyethylmethacrylate and 2-hydroxyethylacrylate
- and a second (meth)acrylate monomer selected from the group consisting of ethylmethacrylate and n-dodecylmethacrylate
wherein the mole ratio first (meth)acrylate monomer / second (meth)acrylate monomer is preferably in the range of from 1:1 to 1:15, preferably 1:1 to 3:7.

Also preferred are (meth)acrylate polymers which are copolymerization products of three different (meth)acrylate monomers CHR¹=CH-(CO)-OR², preferably copolymerization products of
- a first (meth)acrylate monomer selected from the group consisting of 2-hydroxyethylmethacrylate and 2-hydroxyethylacrylate
- ethylmethacrylate
- and a third (meth)acrylate monomer selected from the group consisting of 4-tertbutylcyclohexylmethacrylate, cyclohexylmethacrylate and n-docecylmethacrylate
wherein the mole ratio first (meth)acrylate monomer / ethylmethacrylate / third (meth)acrylate monomer is in the range of from 9:9:2 to 1:1:18, preferably 9:9:2 : 3:1:6.

Suitable (meth)acrylate polymers (B) are commercially available or can be obtained from commercially available monomers by preparation processes known by the skilled person.

For further details regarding preferred (meth)acrylate polymers, reference is made to the non-prepublished patent application "Composition especially for printing or coating comprising (meth)acrylate polymers" filed by the same applicant and on the same day as the present application. The content of said patent application is incorporated herein by reference.

Without wishing to be bound by theory, it is assumed that in a composition according to the present invention the above-defined (meth)acrylate polymers act as rheological modifiers in such manner that their contribution to the viscosity is not significantly influenced by the shear rate over a broad range (from low shear to high shear).

Surprisingly it has been found that use of polymers (B) which are selected from the group consisting of polyurethanes and (meth)acrylate polymers, especially from the preferred polyurethanes and/or from the preferred (meth)acrylate polymers as defined above as rheological modifier in a composition according to the present invention results in improved rheological properties of said composition and accordingly superior quality of an electrochromic layer formed from a composition according to the present invention (i.e. the electrochromic layer obtainable by the process of the present invention).

In certain cases, a composition according to the present invention comprises one or more polymers (B) selected from the group consisting of polyurethanes, preferably from the above-defined preferred polyurethanes, and no polymers selected from the group consisting of (meth)acrylate polymers.

In other cases, a composition according to the present invention comprises one or more polymers (B) selected from the group consisting of (meth)acrylate polymers, preferably from the above-defined preferred (meth)acrylate polymers, and no polymers selected from the group consisting of polyurethanes.

In other cases, a composition according to the present invention comprises one or more polymers (B) selected from the group consisting of (meth)acrylate polymers, preferably from the above-defined preferred (meth)acrylate polymers, and one or more polymers (B) selected from the group consisting of polyurethanes, preferably from the above-defined preferred polyurethanes.

A composition according to the present invention as defined above comprises
(C) one or more compounds having electrochromic and photochromic properties.

A compound (C) is a compound which has both, photochromic properties as defined above and electrochromic properties as defined above.

The photochromic properties of said compound (C) consist in the capability of reversibly darkening, i.e. decreasing the transmission of said compound (C) for visible light, when said compound (C) is exposed to light comprising wavelengths of 525 nm or less (a range including UV light, and some short-wavelength portion of visible light). Furthermore, the photochromic properties of some preferred compounds (C) include the capability of reversibly fading, i.e. increasing the transmission of said compound (C) for visible light, when said compound (C) is exposed to light having longer wave lengths in the visible range (preferably up to 750 nm).

The electrochromic properties of said compound (C) consist in the capability of reversibly fading, i.e. increasing the transmission of said compound (C) for visible light, when said compound (C) is exposed to an electric charge (electrofading). Depending on the chemical nature of the compound (C), electrofading is achieved either by cathodic reduction or by anodic oxidation.

Said compounds (C) are preferably selected from the group consisting of hexatrienes, diarylethenes, dithienylcyclopentenes and fulgides. Suitable compounds are commercially available. Examples of suitable diarylethene compounds are disclosed e.g. in US 7,777,055, WO 2010/142019, WO 2013/044371 and WO 2013/152425.

A composition according to the present invention as defined above comprises
(D) one or more electrolytes.

The term "electrolyte" denotes a substance which is capable of dissociating into mobile ions. In an electrochromic layer obtainable from a composition according to the present invention as defined above, said electrolytes (D), when dissolved in said mixture (A), are at least partly dissociated into mobile ions, which migrate to the electrodes between which the electrochromic layer is disposed, to form an electrical double-layer at the electrode/electrochromic layer interface when an electric field is applied. Accordingly, said electrolytes (D) may be considered as playing a role similar or corresponding to the "salts" of the composition (referred to as a switching material) disclosed in WO 2013/152425.

Preferred electrolytes (D) are selected from the group consisting of
ionic liquids having
cations selected from the group consisting of tetraalkyl ammonium, 1-alkyl-3-methyl imidazolium, 1-alkyl-1-methyl pyrrolidinium and 1-alkyl-1-methyl piperidinium, wherein said alkyl is selected from the group consisting of methyl, ethyl, n-propyl and n-butyl,
and anions selected from the group consisting of tetrafluoroborate, tetracyanoborate, hexafluorophosphate, bis(fluoromethyl)sulfonylimide, bis(trifluoromethylsulfonyl)imide and tris(pentafluoroethyl)trifluorophosphate.

The compounds (D-1) as defined above are ionic liquids. Such compounds are commercially available. Preferred compounds (D-1) are selected from the group consisting of 1-ethyl-3-methylimidazolium bis(fluoromethyl)sulfonylimide, 1-ethyl-3-methylimidazolium bis(trifluoromethylsulfonyl)-imide, 1-ethyl-3-methylimidazolium tris(pentafluoroethyl) trifluorophosphate and 1-ethyl-3-methylimidazolium tetrafluoroborate.

In certain cases it is preferred that a composition according to the present invention further comprises
(E) one or more crosslinking agents for one or more of said polymers (B).

Crosslinking of said polymers (B) imparts increased chemical and mechanical stability to said polymers. Suitable crosslinking agents are known in the art. Preferably, said cross-linking agents exhibit significant cross-linking activity only after a certain temperature is reached (thermally activated crosslinking agents). The cross-linking agents (E) are chemically different from the above-defined polymers (B).

In certain cases it is preferred that a composition according to the present invention further comprises
(F) one or more liquids having a boiling point of 120 °C or less.

Said one or more liquids (F) having a boiling point of 120 °C or less merely act as a vehicle for applying the composition to a surface of a substrate, preferably by means of a printing or coating technique, especially by means of screen printing and stencil printing, and do not remain in the electrochromic layer formed from a composition according to the present invention (i.e. the electrochromic layer obtainable by the process of the present invention, see below). More specifically said liquids (F) serve the purpose of facilitating processing of a composition according to the present invention, e.g. by reducing the viscosity and improving the coatability. Accordingly, said liquids (F) having a boiling point of 120 °C or less may be considered as playing a role similar or corresponding to the "sacrificial solvent" which may be present in the composition (switching material) disclosed in WO 2013/152425. Said liquids (F) are preferably selected from the group consisting of methoxy-2-methylpropane, tetrahydrofurane, 2-methyl-tetrahydrofurane, 1,4-dioxane, toluene, ethanol, methanol, iso-propanol, ethylacetate, methylacetate, acetone, acetonitrile and butanone.

Furthermore, the composition may optionally contain compounds that serve to enhance the switching speed of the electrochromic system (charge compensator, charge transfer agent). Examples of these are known in the art and include e.g. viologens.

A particularly preferred composition according to the present invention comprises
(A) a total amount of from 40 wt.-% to 90 wt.-%, preferably 60 wt.-% to 75 wt.-%, of a mixture (A) as defined above
(B) a total amount of from 0.5 wt.-% to 25 wt.-%, preferably 2 wt.-% to 16 wt.-% of polymers
(C) a total amount of from 5 wt.-% to 25 wt.-%, preferably 10 wt.-% to 20 wt.-%, of compounds having electrochromic and photochromic properties
(D) a total amount of from 0.1 wt.-% to 10 wt.-%, preferably 0.5 wt.-% to 5 wt.-%, of electrolytes
in each case based on the total weight of constituents (A) (B), (C) and (D).

Another particularly preferred composition according to the present invention comprises
(A) a total amount of from 40 wt.-% to 90 wt.-%, preferably 60 wt.-% to 75 wt.-%, of a mixture (A) as defined above
(B) a total amount of from 0.5 wt.-% to 25 wt.-%, preferably 2 wt.-% to 16 wt.-% of polymers
(C) a total amount of from 5 wt.-% to 25 wt.-%, preferably 10 wt.-% to 20 wt.-%, of compounds having electrochromic and photochromic properties
(D) a total amount of from 0.1 wt.-% to 10 wt.-%, preferably 0.5 wt.-% to 5 wt.-%, of electrolytes
(E) a total amount of from 0 wt.-% to 15 wt.-%, preferably 0.1 wt.-% to 5 wt.-%, of crosslinking agents for said polymers (B)
in each case based on the total weight of constituents (A) (B), (C), (D) and (E).

Another particularly preferred composition according to the present invention comprises
(A) a total amount of from 40 wt.-% to 90 wt.-%, preferably 60 wt.-% to 75 wt.-%, of a mixture (A) as defined above
(B) a total amount of from 0.5 wt.-% to 25 wt.-%, preferably 2 wt.-% to 16 wt.-% of polymers
(C) a total amount of from 5 wt.-% to 25 wt.-%, preferably 10 wt.-% to 20 wt.-%, of compounds having electrochromic and photochromic properties
(D) a total amount of from 0.1 wt.-% to 10 wt.-%, preferably 0.5 wt.-% to 5 wt.-%, of electrolytes
in each case based on the total weight of constituents (A), (B), (C) and (D)
and
(F) a total amount of liquids having a boiling point of 120 °C or less in a range of from 0 wt.-% to 500 wt.-%, preferably 10 wt.-% to 250 wt.-% based on the total weight of constituents (A), (B), (C) and (D).

Another particularly preferred composition according to the present invention comprises
(A) a total amount of from 40 wt.-% to 90 wt.-%, preferably 60 wt.-% to 75 wt.-%, of a mixture (A) as defined above
(B) a total amount of from 0.5 wt.-% to 25 wt.-%, preferably 2 wt.-% to 16 wt.-% of polymers
(C) a total amount of from 5 wt.-% to 25 wt.-%, preferably 10 wt.-% to 20 wt.-%, of compounds having electrochromic and photochromic properties
(D) a total amount of from 0.1 wt.-% to 10 wt.-%, preferably 0.5 wt.-% to 5 wt.-%, of electrolytes
(E) a total amount of from 0 wt.-% to 15 wt.-%, preferably 0.1 wt.-% to 5 wt.-%, of crosslinking agents for said polymers (B)
   in each case based on the total weight of constituents (A) (B), (C), (D) and (E)
   and
(F) a total amount of liquids having a boiling point of 120 °C or less in a range of from 0 wt.-% to 500 wt.-%, preferably 10 wt.-% to 250 wt.-% based on the total weight of constituents (A), (B), (C), (D) and (E).

Particularly preferred compositions according to the present invention are those wherein two or more of the above-defined preferred features are combined. Particularly preferred are compositions wherein each of constituents (A), (B), (C), (D) and -if present- (E) and (F) is selected from the above-defined preferred alternatives and is present in the above defined concentration ranges, preferably in a concentration falling in the above-defined preferred ranges.

According to a further aspect of the present invention, there is provided a process for producing a layer assembly comprising an electrochromic layer. Said process comprises the steps of
- providing a first substrate, wherein said first substrate has a surface comprising at least one electronically conductive material selected from the group consisting of metals and transparent conducting oxides
- providing or preparing a composition according to the invention as defined above and applying said composition to said surface of said first substrate
- allowing said composition applied to said surface to form an electrochromic layer on said surface of said first substrate
- optionally providing a second substrate, wherein said second substrate has a surface comprising at least one electronically conductive material selected from the group consisting of metals and transparent conducting oxides, and attaching said surface of said second substrate on a surface of said electrochromic layer facing away from said first substrate.

In the obtained layer assembly, said first substrate has at least one surface which is not covered by the electrochromic layer. Typically, said first substrate has a first surface on which said electrochromic layer is arranged and a second surface opposite to said first surface, wherein on said second surface none such electrochromic layer is arranged. This second surface of the first substrate is also referred to as the surface of the first substrate facing away from said electrochromic layer. On the other hand, the electrochromic layer has a surface in contact with said first surface of said first substrate, and a second surface opposite to said first surface. This second surface of the electrochromic layer is also referred to as the surface of the electrochromic layer facing away from said first substrate.

Preferably, in said process the composition applied to a surface of a first substrate is selected from the above-defined preferred compositions.

Preparing a composition according to the present invention preferably comprises the following steps:
- providing the desired amount of mixture (A)
- providing desired amount of polymers (B)
- adding the mixture (A) to the polymers (B) to obtain a premixture comprising the mixture (A) and the polymers (B)
- heating the premixture under mechanical agitation, e.g. stirring, to a predetermined temperature in the range of from 100 °C to 120 °C and keeping the premixture at said temperature for a duration of 1 to 6 hours under mechanical agitation, e.g. stirring with optionally shaking the premixture up to three times per hour for a few seconds, to properly mix constituents (A) and (B),
- cooling the premixture down to a temperature in the range of from 80 °C to 100 °C without mechanical agitation
- adding desired amounts of constituents (C) and (D) to the premixture, thus obtaining a composition according to the present invention
- keeping the composition for 5 minutes to 45 minutes under mechanical agitation, e.g. stirring, at said temperature in the range of from 80 °C to 100 °C to dissolve constituents (C) and (D)
- cooling the composition down to room temperature without mechanical agitation.

Optionally, crosslinking agents (E) for the polymers (B) are added to the premixture resp. the composition when it has been cooled to a temperature at which the crosslinking agents exhibit no crosslinking activity, in order to preserve the activity of the crosslinking agents (E) for later processing steps (see below).

Said composition is applied to a surface of a first substrate and allowed to form said electrochromic layer on said surface. Preferably, said composition is applied to said surface of said substrate by means of a printing or coating technique, especially by a technique selected from the group consisting of screen printing and stencil printing.

In cases where the composition applied to said surface further comprises any liquids (F) having a boiling point of 120 °C or less as defined above, which merely act as a vehicle for applying the composition to a surface of a substrate, forming said electrochromic layer comprises removing said liquids (F) having a boiling point of 120 °C or less from said composition applied to said surface of said substrate.

A preferred process according to the present invention for producing a layer assembly comprising an electrochromic layer comprises the steps of
- providing or preparing a composition comprising constituents (A) (B), (C) and (D) and optionally constituents (E) and (F) as defined above,
- applying said composition to a surface of a first substrate, said surface of said first substrate comprising at least one electronically conductive material selected from the group consisting of metals and transparent conducting oxides,
- allowing said composition applied to said surface of said first substrate to form an electrochromic layer on said surface,
- optionally attaching a surface of a second substrate on a surface of said electrochromic layer facing away from said first substrate wherein said surface of said second substrate comprises at least one electronically conductive material selected from the group consisting of metals and transparent conducting oxides.

Certain processes according to the present invention further comprise the step of attaching a second substrate on the surface of said electrochromic layer facing away from said first substrate.

In a preferred process according to the present invention
- the first substrate and the second substrate each have a surface comprising at least one electronically conductive material selected from the group consisting of metals and transparent conducting oxides,
- a composition comprising constituents (A) (B), (C) and (D) and optionally constituents (E) and (F) as defined above is applied to said surface of the first substrate comprising said at least one electronically conductive material,
- said composition applied to said surface of the first substrate is allowed to form an electrochromic layer on said surface of the first substrate,
- and said surface of the second substrate comprising said at least one electronically conductive material is attached to the surface of said electrochromic layer facing away from said first substrate.

A particularly preferred process according to the present invention for producing a layer assembly comprising an electrochromic layer comprises the steps of
- providing or preparing a composition comprising constituents (A) (B), (C) and (D) and optionally constituents (E) and (F) as defined above,
- applying said composition to a surface of a first substrate, said surface of said first substrate comprising at least one electronically conductive material selected from the group consisting of metals and transparent conducting oxides,
- allowing said composition applied to said surface of said first substrate to form an electrochromic layer on said surface,
- attaching a surface of a second substrate on a surface of said electrochromic layer facing away from said first substrate wherein the surface of said second substrate comprises at least one electronically conductive material selected from the group consisting of metals and transparent conducting oxides.

A further especially preferred process according to the present invention comprises the steps of
- providing a first substrate, wherein said first substrate has a surface comprising at least one electronically conductive material selected from the group consisting of metals and transparent conducting oxides
- providing or preparing a composition according to the invention as defined above and applying said composition to said surface of said first substrate
- allowing said composition applied to said surface to form an electrochromic layer on said surface of said first substrate
- providing a second substrate, wherein said second substrate has a surface comprising at least one electronically conductive material selected from the group consisting of metals and transparent conducting oxides, and attaching said surface of said second substrate on a surface of said electrochromic layer facing away from said first substrate.

In these preferred processes according to the invention, the first substrate and the second substrate each have a surface comprising at least one electronically conductive material selected from the group consisting of metals and transparent conducting oxides, a composition according to the present invention is applied to said surface of the first substrate comprising said at least one electronically conductive material, said composition applied to said surface is allowed to form an electrochromic layer on said surface and the surface of the second substrate comprising said at least one electronically conductive material is attached to the surface of said electrochromic layer facing away from said first substrate.

In certain cases, the process according to the present invention further comprises the step of crosslinking said polymers (B) by means of crosslinking agents (E) as defined above after attaching said surface comprising at least one electronically conductive material selected from the group consisting of metals and transparent conducting oxides of said second substrate on said surface of said electrochromic layer facing away from said first substrate.

The materials of the substrates are preferably selected such that at least one of said first and second substrate has a light transmission of 70 % or more, preferably 90 % or more, measured according to ASTM D1003 (Procedure A) as published in November 2013. Preferably, both of said substrates have a light transmission of 70 % or more, preferably 90 % or more, measured according to ASTM D1003 (Procedure A) as published in November 2013.

Said first and second substrate are both in a form selected from the group consisting of foils, films, webs, panes and plates. Preferably, said first and said second substrate have the same form and have equal dimensions. Said first and said second substrate may comprise the same or different materials.

Preferably, said substrate has a thickness in the range of from 1 µm to 1000 µm, preferably 10 µm to 500 µm and more preferably from 50 µm to 200 µm.

Preferably, said substrates comprise one or more materials selected from the group consisting of glasses, metals, transparent conducting oxides and organic polymers.

Preferably the first substrate and the second substrate each comprise an optically transparent material selected from the group of glasses and organic polymers, which is electronically insulating, and have a surface comprising at least one electronically conductive material selected from the group consisting of metals and transparent conducting oxides. Said surfaces of the first and said second substrate may comprise the same or different electronically conductive materials. The electronically conductive material forms electrodes capable of interacting with the electrochromic layer, i.e. applying an electrical field across said electrochromic layer.

Preferred types of glass are e.g. float glass, low iron float glass, heat strengthened glass and chemically strengthened glass. Optionally, the glass has a low-emissivity (low-e) coating, sun-protection coating or any other coating on the surface facing away from the above-described electrochromic layer.

Preferred organic polymers are selected from the group consisting of polymethylmethacrylate (PMMA, commercially available e.g. as Plexiglas^{™}), polycarbonate (PC), polyethylene (PE), low density polyethylene (LDPE), linear low density polyethylene (LLDPE), polypropylene (PP), low density polypropylene (LDPP), polyethylene therephthalate (PET), glycol modified polyethylene therephthalate, polyethylene napthalate (PEN), cellulose acetate butyrate, polylactide (PL), polystyrene (PS), polyvinyl chloride (PVC), polyimides (PI), polypropyleneoxide (PPO) and mixtures thereof. PET and PEN are particularly preferred.

Preferably, said transparent conducting oxides (TCO) are selected from the group consisting of ITO (indium doped tin oxide), AZO (aluminum doped zinc oxide), IGZO (indium gallium doped zinc oxide), GZO (gallium doped zinc oxide), FTO (fluorine doped tin oxide), indium oxide, tin oxide and zinc oxide.

Preferably, at the above-defined surfaces of said substrates, said metals are present in the form of a structure which is substantially optically transparent, e.g. in the form of fine mesh or nanowires. Preferably, said metals are selected from the group consisting of Cu, Ag, Au, Pt and Pd.

Particularly preferable the first substrate and the second substrate each comprise an optically transparent material selected from the group of organic polymers, which is electronically insulating, and have a surface comprising at least one electronically conductive material selected from the group consisting of metals and transparent conducting oxides.

An electrochromic layer formed by the process of the present invention comprises
- one or more polymers (B)
- dispersed within said polymers (B) a liquid phase comprising a mixture (A) as defined above
- and dissolved within said liquid phase
   (C) one or more compounds having electrochromic and photochromic properties
   (D) one or more electrolytes.

Optionally in said electrochromic layer the polymers (B) are cross-linked.

Preferably, said electrochromic layer comprises no liquids having a boiling point of 120 °C or less.

Said electrochromic layer preferably has a thickness in the range of from 1 µm to 250 µm, more preferably of from 5 µm to 50 µm, most preferably of from 20 µm to 40 µm. Thickness may be determined by interferometry, optical 3D microscopy or usual mechanical methods.

Without being bound to theory, it is believed that within the electrochromic layer the polymers (B) form a contiguous gel-like phase (sometimes also referred to as a semisolid phase) extending throughout the electrochromic layer. Said contiguous gel-like phase is herein referred to as a matrix. Said matrix accommodates the above-defined constituents of the electrochromic layer which are dispersed within said matrix. Without being bound to theory, it is believed that in the electrochromic layer said liquid phase comprising the mixture (A) (as defined above) wherein said constituents (C) and (D) as defined above are dissolved, is confined within free spaces extending through the matrix comprising the one or more polymers (B), thus providing a network of paths throughout the electrochromic layer extending between a first and a second electrode. This network of paths allows flow of ions of the electrolytes (D) and molecules of the compounds (C) when an electric voltage is applied.

Accordingly, the electrochromic layer preferably comprises
- a matrix comprising one or more polymers (B)
- dispersed within said matrix, a liquid phase comprising a mixture (A) as defined above and
- dissolved within said liquid phase
   (C) one or more compounds having electrochromic and photochromic properties
   (D) one or more electrolytes.

Regarding specific and preferred characteristics and the functions of the individual constituents of the electrochromic layer, reference is made to the disclosure provided above.

A further aspect of the present invention relates to an article comprising a layer assembly consisting of
- a first substrate,
- an electrochromic layer arranged on and in contact with a surface of said first substrate, said electrochromic layer comprising
   - one or more polymers (B)
   - dispersed within said one or more polymers (B), a liquid phase comprising a mixture (A) as defined above
   - and dissolved within said liquid phase
      (C) one or more compounds having electrochromic and photochromic properties
      (D) one or more electrolytes
   - optionally a second substrate having a surface arranged on and in contact with a surface of said electrochromic layer facing away from said first substrate
   wherein said surfaces of said substrates which are in contact with said electrochromic layer comprise at least one electronically conductive material selected from the group consisting of metals and transparent conducting oxides.

Regarding specific and preferred characteristics of the electrochromic layer, reference is made to the disclosure provided above. Regarding specific and preferred characteristics of the individual constituents of the electrochromic layer, reference is made to the disclosure provided above. With regard to specific and preferred characteristics of the substrates, reference is made to the disclosure provided above.

A layer assembly for an article according to the present invention is obtainable by the above-described process.

In certain cases, an article according to the present invention consists of a layer assembly consisting of
- a substrate
- an electrochromic layer as defined above, said electrochromic layer being arranged on and in contact with a surface of said substrate,
wherein said surface of said substrate which is in contact with said electrochromic layer comprises at least one electronically conductive material selected from the group consisting of metals and transparent conducting oxides.

In other cases, an article according to the present invention consists of a layer assembly consisting of
- a first substrate,
- a second substrate
- and an electrochromic layer as defined above
wherein
- said first substrate has a surface comprising at least one electronically conductive material selected from the group consisting of metals and transparent conducting oxides
- said second substrate has a surface comprising at least one electronically conductive material selected from the group consisting of metals and transparent conducting oxides
- said electrochromic layer is interposed between and in contact with
   - said surface of the first substrate which comprises at least one electronically conductive material selected from the group consisting of metals and transparent conducting oxides and
   - said surface of the second substrate which comprises at least one electronically conductive material selected from the group consisting of metals and transparent conducting oxides.

In other cases, an article according to the present invention comprises a layer assembly consisting of
- a first substrate
- a second substrate
- and an electrochromic layer as defined above
wherein
- said first substrate has a surface comprising at least one electronically conductive material selected from the group consisting of metals and transparent conducting oxides
- said second substrate has a surface comprising at least one electronically conductive material selected from the group consisting of metals and transparent conducting oxides
- said electrochromic layer is interposed between and in contact with
   - said surface of the first substrate which comprises at least one electronically conductive material selected from the group consisting of metals and transparent conducting oxides and
   - said surface of the second substrate which comprises at least one electronically conductive material selected from the group consisting of metals and transparent conducting oxides.

The electronically conductive materials at the surface of the first and second substrate form electrodes capable of interacting with the electrochromic layer, i.e. applying an electrical field across said electrochromic layer.

In an article according to the present invention the electrochromic layer is arranged on a surface of said substrate in such manner that it partially or completely covers said surface of said substrate. In specific cases the electrochromic layer forms a pattern on said surface of said substrate. The pattern may be selected from any random and non-random structures, like grids, stripes, waves, dots and circles.

A preferred article according to the present invention further comprises a first support layer comprising a material selected from the group consisting of glass and organic polymers, and a second support layer comprising a material selected from the group consisting of glass and organic polymers, wherein said layer assembly is disposed between said first support layer and said second support layer.

Said first and second support layer are both in a form selected from the group consisting of foils, films, webs, panes and plates. Preferably, said first and said second support layer are both of the same material, the same form and have equal dimensions.

Preferred types of glass are e.g. float glass, low iron float glass, heat strengthened glass and chemically strengthened glass. Optionally, the glass has a low-emissivity (low-e) coating, sun-protection coating or any other coating on the surface facing away from the above-described layer assembly.

The materials of the support layers are selected such that at least one of said support layers has a light transmission of 70 % or more, preferably 90 % or more, measured according to ASTM D1003 (Procedure A) as published in November 2013. Preferably, both of said support layers have a light transmission of 70 % or more, preferably 90 % or more, measured according to ASTM D1003 (Procedure A) as published in November 2013.

Optionally, antireflection (AR) coating can be used to enhance the transmittance through optical devices, and a variety of low refractive index, nanoporous, and/or nanostructured coatings can be applied to glass and plastic substrates (see for example: C. G. Granqvist, Transparent conductors as solar energy materials: a panoramic review, Solar Energy Mater. Solar Cells 91, 1529-1598 (2007)). It has been demonstrated that coating both sides of a glass pane with self-assembled silica nanoparticle films made it possible to obtain a transmittance as large as 99.5% in the middle of the luminous spectrum (cf. P. Nostel, A. Roos, and B. Karlsson, Optical and mechanical properties of sol-gel antireflective films for solar energy applications, Thin Solid Films 351, 170-175 (1999); S. E. Yancey, W. Zhong, J. R. Heflin, and A.L. Ritter, The influence of void space on antireflection coatings of silica nanoparticle self-assembled films, J. Appl. Phys. 99, 034313 vol. 1-10 (2006).

Preferred organic polymers are selected from the group consisting of polymethylmethacrylate (PMMA, commercially available e.g. as Plexiglas^{™}), polycarbonate (PC), polyethylene (PE), low density polyethylene (LDPE), linear low density polyethylene (LLDPE), polypropylene (PP), low density polypropylene (LDPP), polyethylene therephthalate (PET), glycol modified polyethylene therephthalate, polyethylene napthalate (PEN), cellulose acetate butyrate, polylactide (PL), polystyrene (PS), polyvinyl chloride (PVC), polyimides (PI), polypropyleneoxide (PPO) and mixtures thereof.

In certain articles according to the present invention, said first support layer is attached to the first substrate by an adhesive and/or said second support layer is attached to said second substrate by an adhesive.

Further preferably, said article comprises a first adhesive layer between said first substrate and said first support layer and a second adhesive layer between said second substrate and said second support layer.

The adhesives are selected such that the adhesive layer has a light transmission which is not lower than the light transmission of the support layer which is attached to the layer assembly by said adhesive.

Suitable adhesives are thermoplastics, e.g. polyvinylbutyral commercially available e.g. under the trade names Butvar, Mowital, Pioloform, BUTACITE, SAFLEX, S-Lec, TROSIFOL, polyvinylalcohol, polyvinylacetate, ethylene-vinylacetate-copolymers, silicones, polyurethanes, ionomer resins (commercially available e.g. under the trade name SentryGlas®) and polymethylmethacrylate (PMMA).

Techniques for attaching said support layers to said layer assembly are known in the art and are described e.g. in WO 2013/152425. Typically, attaching said support layers to said layer assembly is achieved by application of heat, or heat and pressure (e.g. in an autoclave or a press or by means of heated rolls), or heat with reduced pressure (e.g. in a vacuum bag).

An article according to the invention typically comprises further elements, e. g. electrical connections, switches, controlling units, supporting structures and sealants. Such further elements are known in the art.

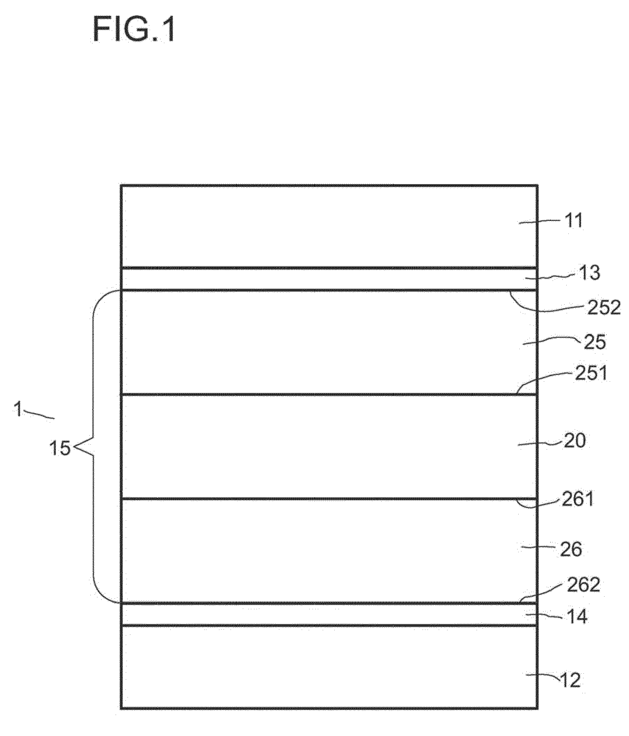

An exemplary preferred article according to the present invention is illustrated in figure 1 which is a schematic side elevation of said article not drawn to scale.

The article 1 according to figure 1 consists of
- a first support layer 11 and a second support layer 12
- a first adhesive layer 13 and a second adhesive layer 14
- a layer assembly 15 consisting of
   - a first substrate 25 having a surface 251 and a surface 252
   - an electrochromic layer 20
   - a second substrate 26 having a surface 261 and a surface 262.

Said electrochromic layer 20 comprises
- one or more polymers (B) as defined above
- dispersed within said one or more polymers (B), a liquid phase comprising a mixture (A) as defined above
- and dissolved within said liquid phase
   (C) one or more compounds having electrochromic and photochromic properties
   (D) one or more electrolytes.

Said electrochromic layer 20 is interposed between surface 251 of the first substrate 25 and surface 261 of the second substrate 26. The materials of the substrates 25 and 26 are selected such that at least one of said substrates has a light transmission of 70 % or more, preferably 90 % or more, measured according to ASTM D1003 (Procedure A) as published in November 2013. Surface 251 of said first substrate 25 which is in contact with electrochromic layer 20 comprises at least one electronically conductive material selected from the group consisting of metals and transparent conducting oxides, thereby forming a first electrode at surface 251 of said first substrate 25. Surface 261 of said second substrate 26 which is in contact with electrochromic layer 20 comprises at least one electronically conductive material selected from the group consisting of metals and transparent conducting oxides, thereby forming a second electrode at surface 261 of said second substrate 26. Said electrodes are capable of interacting with the electrochromic layer 20, i.e. applying an electrical field across said electrochromic layer 20.

Article 1 further comprises a first adhesive layer 13 between said first substrate 15 and said first support layer 11 and a second adhesive layer 14 between said second substrate 16 and said second support layer 12. In said article, said first support layer 11 is attached by means of first adhesive layer 13 to surface 252 of said first substrate 25 facing away from said electrochromic layer 20, and said second support layer 12 is attached by means of second adhesive layer 14 to said surface 262 of said second substrate 26 facing away from said electrochromic layer 20.

Based on article 1 as shown in figure 1, one or more of the following modifications are possible, which correspond to other preferred articles according to the present invention:
- omitting one or both of adhesive layers 13 and 14
- omitting support layer 11 and adhesive layer 13
- omitting support layer 12 and adhesive layer 14
- omitting support layers 11 and 12 and adhesive layers 13 and 14.

### Examples

The swelling of samples of polyethylene terephtalate (PET) foil (trade name Melinex ST506, thickness 125 µm) which were exposed to different organic liquids and mixtures of two or three organic liquids was examined by determining the weight increase of each sample after 1 hour storage in the organic liquid or mixture at 120 °C. PET foil is commonly used as a substrate for an electrochromic layer. For the mixtures of two or three organic liquids, the weight ratio of said liquids is indicated in table 1.

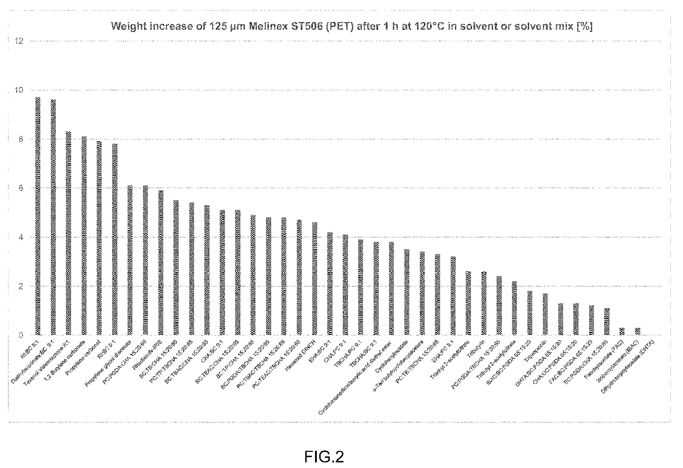

The test results are compiled in table 1 and plotted diagrammatically in fig. 2.

**Table 1**

| organic liquid or mixture | Weight of foil prior to treatment [mg] | Weight of foil after treatment [mg] | Δ Weight [mg] | Weight increase [%] |
|---|---|---|---|---|
| BC: RI 1:5 | 13.1 | 14.5 | 1.4 | 9.7 |
| BC: Diethylsuccinate 1:9 | 12.3 | 13.6 | 1.3 | 9.6 |
| Texanol:Valerolactone 9:1 | 9.9 | 10.9 | 0.9 | 8.3 |
| 1.2-Butylene carbonate (BC) | 12.4 | 13.5 | 1.1 | 8.1 |
| Propylene carbonate (PC) | 12.9 | 14 | 1.1 | 7.9 |
| BC:RI 1:9 | 10.6 | 11.5 | 0.9 | 7.8 |
| Propylene glycol diacetate (PGDA) | 12.2 | 13 | 0.8 | 6.1 |
| PC:CHA:PGDA 15:65:20 | 12.4 | 13.2 | 0.8 | 6.1 |
| Rhodiasolv-IRIS (RI) | 9.6 | 10.2 | 0.6 | 5.9 |
| BC:CHA:TB 15:65:20 | 10.4 | 11 | 0.6 | 5.5 |
| PC:TBCHA:TP 15:65:20 | 7.0 | 7.4 | 0.4 | 5.4 |
| BC:CHA:TBAC: 15:65:20 | 12.5 | 13.2 | 0.7 | 5.3 |
| BC:CHA 1:9 | 13.1 | 13.8 | 0.7 | 5.1 |
| BC:CHA:TEAC 15:65:20 | 13.1 | 13.8 | 0.7 | 5.1 |
| BC:CHA:TP 15:65:20 | 9.7 | 10.2 | 0.5 | 4.9 |
| BC:TBCHA:PGDA 15:65:20 | 11.8 | 12.4 | 0.6 | 4.8 |
| PC:TBCHA:TBAC 15:65:20 | 9.9 | 10.4 | 0.5 | 4.8 |
| PC:TBCHA:TEAC 15:65:20 | 12.1 | 12.7 | 0.6 | 4.7 |
| 1.2-Cyclohexandicarboxyclic acid diisononylester (DINCH) | 12.4 | 13 | 0.6 | 4.6 |
| BC:EHA 1:9 | 9.1 | 9.5 | 0.4 | 4.2 |
| PC:CHA 1:9 | 14.2 | 14.8 | 0.6 | 4.1 |
| PC:TBCHA 1:9 | 12.4 | 12.9 | 0.5 | 3.9 |
| BC:TBCHA 1:9 | 15 | 15.6 | 0.6 | 3.8 |
| Cyclohexanedicarboxylic acid diethyl ester | 12.7 | 13.2 | 0.5 | 3.8 |
| Cyclohexylacetate (CHA) | 11.1 | 11.5 | 0.4 | 3.5 |
| 4-Tert butylcyclohexylacetate (TBCHA) | 11.5 | 11.9 | 0.4 | 3.4 |
| PC:TBCHA:TP 15:65:20 | 8.9 | 9.2 | 0.3 | 3.3 |
| PC:EHA 1:9 | 9.1 | 9.4 | 0.3 | 3.2 |
| Triethyl 2-acetylcitrate (TEAC) | 14.9 | 15.3 | 0.4 | 2.6 |
| Tributyrin (B) | 11.2 | 11.5 | 0.3 | 2.6 |
| PC:TBCHA:PGDA 15:65:20 | 12.1 | 12.4 | 0.3 | 2.4 |
| Tributyl 2-acetylcitrate (TBAC) | 13.2 | 13.5 | 0.3 | 2.2 |
| BC:IBAC:PGDA 15:65:20 | 61.4 | 62.5 | 1.1 | 1.8 |
| Tripropionin (TP) | 11.8 | 12 | 0.2 | 1.7 |
| BC:DHTA:PGDA 15:65:20 | 69.6 | 70.5 | 0.9 | 1.3 |
| PC:CHA:PGDA 15:65:20 | 31.0 | 31.4 | 0.4 | 1.3 |
| BA:FAC:PGDA 15:65:20 | 58.6 | 59.3 | 0.7 | 1.2 |
| BC:CHA:PGDA 15:65:20 | 8.9 | 9 | 0.1 | 1.1 |
| Fenchylacetate (FAC) | 38.3 | 38.4 | 0.1 | 0.3 |
| Isobornylacetate (IBAC) | 63.5 | 63.7 | 0.2 | 0.3 |
| Dihydroterpenylacetate (DHTA) | 58.8 | 58.8 | 0 | 0 |

Abbreviations:
BC = 1,2-butylene carbonate;
CHA = cyclohexylacetate,
DHTA = dihydroterpinyl acetate;
EHA = 2-ethylhexylacetate,
FAC = fenchyl acetate;
GC = glycerol carbonate;
Hexamoll DINCH
IBAC = isobornylacetate
PC = propylene carbonate,
PGDA = propyleneglycol diacetate;
RI = Rhodiasolv IRIS (2-methyldimethylglutarate),
TB = tributyrin (glycerol tributyrate)
TBAC = Tributylacetylcitrat,
TBCHA = 4-*tert*-butylcyclohexylacetate,
TEAC = triethylacetylcitrate,
Texanol = 2,2,4-trimethyl-1,3-pentandiolmonoisobutyrat
TP = tripropionin (glycerol tripropionate)

The test results in table 1 and fig. 2 show that mixtures (A) according to the present invention cause remarkably lower swelling of PET foil, compared to certain mixtures disclosed in WO 2013/152425 (BC:RI 1:9, Texanol:Valorolactone 9:1) and WO 2014/134714 (BC:Diethylsuccinate 1:9).

Table 1 and fig. 2 show that certain individual compounds falling into above-defined groups (A-2) and (A-3) cause a similar low or even lower swelling, compared to the tested mixtures (A) according to the invention, however it was observed that these compounds alone do not provide a sufficient solubility for commonly used compounds (C) having electrochromic and photochromic properties and/or do not exhibit a sufficiently high dielectric constant.

## Claims

1. Composition comprising the following constituents
(A) a mixture consisting of
(A-1) one or more compounds selected from the group consisting of 1,2-butylene carbonate, 2,3-butylene carbonate, propylene carbonate and glycerol carbonate
(A-2) one or more compounds selected from the group consisting of cyclohexylacetate
alkyl-cyclohexylacetates wherein said alkyl group is selected from the group consisting of alkyls having 1 to 9 carbon atoms, preferably 4-tertbutylcyclohexylacetat
2-ethylhexylacetate
dialkyl esters of 1,2-cyclohexanedicarboxylic acid, wherein said alkyl groups are selected from the group consisting of alkyls having 1 to 4 carbon atoms, preferably 1,2-cyclohexanedicarboxylic acid diethylester
dihydroterpinylacetate
isobornylacetate
bornylacetate
fenchylacetate
(A-3) optionally one or more compounds selected from the group consisting of
2,2,4-trimethyl-1,3-pentanediol monoisobutyrate dimethyl-2-methylglutarate
diethyl malonate
propylene glycol diacetate
ethylene glycol diacetate
glycerol triesters of carboxylic acids having 3 to 6 carbon atoms, preferably glycerol triesters of propionic acid and glycerol triesters of butyric acid
tri-alkyl acetylcitrates, wherein said alkyl groups are selected from the group consisting of alkyls having 1 to 4 carbon atoms, preferably tri-n-ethylacetylcitrate and tri-n-butylacetylcitrate
wherein in said mixture (A) the total weight fraction of said compounds (A-2) and (A-3) is 50 wt.-% or more, preferably 60 wt.-% or more, more preferably 70 wt.-% or more, most preferably 80 wt.-% or more, based on the total weight of said mixture (A)
(B) one or more polymers
(C) one or more compounds having electrochromic and photochromic properties
(D) one or more electrolytes
wherein the constituents (B), (C) and (D) are dissolved or dispersed in mixture (A).

2. A composition according to claim 1, wherein said mixture (A) consists of (A-1) one or more compounds selected from the group consisting of 1,2-butylene carbonate, 2,3-butylene carbonate, propylene carbonate and glycerol carbonate
(A-2) one or more compounds selected from the group consisting of cyclohexylacetate
4-tertbutylcyclohexylacetate
2-ethylhexylacetate
1,2-cyclohexanedicarboxylic acid diethylester;
dihydroterpinylacetate
isobornylacetate
bornylacetate
fenchylacetate
wherein in said mixture (A) the weight fraction of said compound (A-2) is 50 wt.-% or more, preferably 60 wt.-% or more, more preferably 70 wt.-% or more, most preferably 80 wt.-% or more, based on the total weight of said mixture (A).

3. A composition according to claim 1 or 2, wherein said mixture (A) consists of
(A-1) a compound selected from the group consisting of 1,2-butylene carbonate, 2,3-butylene carbonate and propylene carbonate
(A-2) a compound selected from the group consisting of cyclohexylacetate, 4-tertbutylcyclohexylacetate and 2-ethylhexylacetate
wherein in said mixture (A) the weight fraction of said compound (A-2) is 50 wt.-% or more, preferably 60 wt.-% or more, more preferably 70 wt.-% or more, most preferably 80 wt.-% or more, based on the total weight of said mixture (A).

4. A composition according to claim 1, wherein said mixture (A) consists of
(A-1) one or more compounds selected from the group consisting of 1,2-butylene carbonate, 2,3-butylene carbonate, propylene carbonate and glycerol carbonate
(A-2) one or more compounds selected from the group consisting of cyclohexylacetate
4-tertbutylcyclohexylacetate
2-ethylhexylacetate
1,2-cyclohexanedicarboxylic acid diethylester;
dihydroterpinylacetate
isobornylacetate
bornylacetate
fenchylacetate
(A-3) one or more compounds selected from the group consisting of 2,2,4-trimethyl-1,3-pentanediol monoisobutyrate dimethyl-2-methylglutarate
diethyl malonate
propylene glycol diacetate
ethylene glycol diacetate
glycerol tripropionate
glycerol tributyrate
tributylacetylcitrate
triethylacetylcitrate,
wherein in said mixture (A)
the weight fraction of said compounds (A-2) is 50 wt.-% to 80 wt.-%, preferably 60 wt.-% to 70 wt.-%, and
the weight fraction of said compounds (A-3) is 10 wt.-% to 30 wt.-%, preferably 15 wt.-% to 25 wt.-%,
in each case based on the total weight of said mixture (A).

5. A composition according to claim 1 or 4, wherein said mixture (A) consists of
(A-1) a compounds selected from the group consisting of 1,2-butylene carbonate, 2,3-butylene carbonate, propylene carbonate and glycerol carbonate
(A-2) a compound selected from the group consisting of cyclohexylacetate, 4-tertbutylcyclohexylacetate and 2-ethylhexylacetate, dihydroterpinyl acetate, isobornylacetate
(A-3) a compound selected from the group consisting of dimethyl-2-methylglutarate, diethyl malonate, propylene glycol diacetate, ethylene glycol diacetate, glycerol tripropionate, glycerol tributyrate, tributylacetylcitrate and triethylacetylcitrate,
wherein in said mixture (A)
the weight fraction of said compound (A-2) is 50 wt.-% to 80 wt.-%, preferably 60 wt.-% to 70 wt.-%, and
the weight fraction of said compound (A-3) is 10 wt.-% to 30 wt.-%, preferably 15 wt.-% to 25 wt.-%,
in each case based on the total weight of said mixture (A).

6. Composition according to any preceding claim wherein said compounds (C) having electrochromic and photochromic properties are selected from the group consisting of hexatrienes, diarylethenes, dithienylcyclopentenes and fulgides.

7. Composition according to any preceding claim, wherein said electrolytes (D) are selected from the group consisting of
ionic liquids having
cations selected from the group consisting of tetraalkyl ammonium, 1-alkyl-3-methyl imidazolium, 1-alkyl-1-methyl pyrrolidinium and 1-alkyl-1-methyl piperidinium, wherein said alkyl is selected from the group consisting of methyl, ethyl, n-propyl and n-butyl,
and anions selected from the group consisting of tetrafluoroborate, tetracyanoborate, hexafluorophosphate, bis(fluoromethyl)sulfonylimide, bis(trifluoromethylsulfonyl)imide and tris(pentafluoroethyl)trifluorophosphate.

8. Composition according to any preceding claim, further comprising
(E) one or more crosslinking agents for said polymers (B).

9. Composition according to any preceding claim, further comprising
(F) one or more liquids having a boiling point of 120 °C or less, wherein said liquids are preferably selected from the group consisting of methoxy-2-methylpropane, tetrahydrofurane, 2-methyl-tetrahydrofurane, 1,4-dioxane, toluene, ethanol, methanol, iso-propanol, ethylacetate, methylacetate, acetone, acetonitrile and butanone.

10. Process for producing a layer assembly comprising an electrochromic layer, comprising the steps of
- providing a first substrate, wherein said first substrate has a surface comprising at least one electronically conductive material selected from the group consisting of metals and transparent conducting oxides,
- providing or preparing a composition according to any of claims 1 to 9 and applying said composition to said surface of said first substrate
- allowing said composition applied to said surface to form an electrochromic layer on said surface of said first substrate
- optionally providing a second substrate, wherein said second substrate has a surface comprising at least one electronically conductive material selected from the group consisting of metals and transparent conducting oxides, and attaching said surface of said second substrate on a surface of said electrochromic layer facing away from said first substrate.

11. Process according to any of claims 10, wherein said composition is applied to said surface of said substrate by means of a technique selected from the group consisting of printing and coating.

12. Process according to any of claims 10 and 11, wherein forming said electrochromic layer comprises removing said liquids (F) having a boiling point of 120 °C or less from said composition applied to said surface of said substrate.

13. Process according to any of claims 10 to 12, further comprising the step of cross-linking said polymers (B) after attaching said surface of said second substrate on said surface of said electrochromic layer facing away from said first substrate.

14. An article comprising
a layer assembly consisting of
- a first substrate,
- an electrochromic layer arranged on and in contact with a surface of said first substrate, said electrochromic layer comprising
- one or more polymers (B)
- dispersed within said one or more polymers (B) a liquid phase comprising a mixture (A) as defined in any of claims 1 to 5
- and dissolved within said liquid phase
(C) one or more compounds having electrochromic and photochromic properties
(D) one or more electrolytes
- optionally a second substrate, said second substrate having a surface arranged on and in contact with a surface of said electrochromic layer facing away from said first substrate
- wherein said surfaces of said substrates which are in contact with said electrochromic layer comprise at least one electronically conductive material selected from the group consisting of metals and transparent conducting oxides.

15. Article according to claim 14,
said article further comprising a first support layer comprising a material selected from the group consisting of glass and organic polymers, and a second support layer comprising a material selected from the group consisting of glass and organic polymers,
wherein said layer assembly is disposed between said first support layer and said second support layer.
